# EUROPEAN PATENT APPLICATION

(11) **EP 4 485 593 A1**
(43) Date of publication of application: **01.01.2025**
(21) Application number: 23760425.1
(22) Date of filing: 24.02.2023
(51) Int. Cl.: H01M 10/04, B65H 3/08, B65H 5/08

(54) **UNIT CELL TRANSFER DEVICE AND TRANSFER METHOD**

(30) Priority: 25.02.2022 KR 20220025560; 23.02.2023 KR 20230024550
(71) Applicant: LG Energy Solution, Ltd., Seoul 07335 (KR)
(72) Inventor: KOO, Bon Chul, Daejeon 34122 (KR)
(74) Representative: Goddar, Heinz J.
(86) International application number: PCT/KR2023/002681
(87) International publication number: WO 2023/163551

(57) **Abstract**

An apparatus for transferring a unit cell according to an embodiment of the present invention may allow a first sensing part to detect alignment of the unit cell before a rotor part adsorbs the unit cell, and correct the alignment of the unit cell on the basis of the detected information. Accordingly, the alignment detection and correction operations may be performed in advance to more precisely correct the alignment of the unit cell. In addition, in the apparatus for transferring the unit cell, a first sensing part to a third sensing part may be disposed at positions, respectively, so that an alignment correction range is secured, and the discarded unit cells are reduced to lead an increase in production of electrodes.

## Description

### TECHNICAL FIELD

The present application claims the benefit of the priority of Korean Patent Application Nos. 10-2022-0025560, filed on February 25, 2022, and 10-2023-0024550, filed on February 23, 2023, which are hereby incorporated by reference in their entirety.

The present invention relates to an apparatus and method for transferring a unit cell during manufacturing of a second battery.

### BACKGROUND ART

In general, types of second batteries include a nickelcadmium battery, a nickel-hydrogen battery, a lithium-ion battery, a lithium-ion polymer battery, and the like. These second batteries are applied to and used in not only small products such as digital camera, P-DVD, MP3P, mobile phone, PDA, portable game device, power tool and E-bike, but also large products, such as electric vehicle and hybrid vehicle, which require higher powers, energy storage systems for storing surplus electricity or new renewable energy, and energy storage systems for backup.

In order to manufacture these second batteries, a positive electrode collector and a negative electrode collector are coated with electrode active material slurry to make a positive electrode and a negative electrode, and then the positive electrode and the negative electrode are stacked at both sides of a separator to form an electrode assembly having a predetermined shape. Thereafter, a battery case accommodates the electrode assembly and is sealed after injection of an electrolyte.

During manufacturing of an electrode assembly, a plurality of unit cells stacked in a magazine are transferred to a subsequent process, and an apparatus for transferring a unit cell may be used during the transfer. As processes of designing and transferring the unit cell in alignment are processes that are essentially accompanied by the manufacturing of the electrode assembly using the unit cell, the apparatus for transferring the unit cell has to transfer the unit cell while precisely maintaining the alignment of the unit cell. Thus, there is a need for a transfer apparatus that more precisely detects alignment of the unit cell to effectively correct the alignment with respect to an alignment error.

### DISCLOSURE OF THE INVENTION

### TECHNICAL PROBLEM

An object to be solved by the present invention is to provide a transfer apparatus and a transfer method.

### TECHNICAL SOLUTION

In a transfer apparatus for transferring a plurality of unit cells stacked in a magazine, an apparatus for transferring a unit cell according to an embodiment of the present invention may include an adsorbing part, which adsorbs the unit cell disposed in the magazine, a rotor part, which moves the unit cell through a rotational motion in a state in which the rotor part receives the unit cell from the adsorbing part and adsorbs the unit cell, and a first sensing part which detects alignment of the unit cell adsorbed to the adsorbing part.

The rotor part may include at least one rotary wing, which rotates around a rotary shaft, and at least one adsorbing plate which is connected to one end of the rotary wing and adsorbs and transfers the unit cell.

The apparatus for transferring the unit cell may further include a controller that controls the adsorption and transfer operations of the rotor part on the basis of the alignment of the unit cell, which is detected by the first sensing part.

The adsorbing part may include a first adsorbing part, which adsorbs the unit cell disposed in the magazine, and a second adsorbing part which is disposed at an outer side of the first adsorbing part and receives the unit cell from the first adsorbing part to adsorb the unit cell.

The controller may adjust an adsorption angle and position of the adsorbing plate disposed above the second adsorbing part on the basis of the alignment of the unit cell, which is detected by the first sensing part.

The adsorbing plate may be characterized by sequentially moving to a first position at which the unit cell is received from the adsorbing part, a second position at which the alignment of the adsorbed unit cell is detected, a third position at which the adsorbed unit cell is released, and a fourth position at which the unit cell that is not released at the third position is discarded.

The apparatus for transferring the unit cell may further include a second sensing part that is below the adsorbed unit cell at the second position and detects alignment of a bottom surface of the unit cell.

The apparatus for transferring the unit cell may further include a third sensing part that is disposed at the third position to detect alignment of the unit cell before the unit cell is released.

The controller may determine whether to release the unit cell on the basis of the alignment of the unit cell, which is detected by each of the second sensing part and the third sensing part, and control the rotor part to transfer the unit cell, which is not released, to the fourth position.

The first sensing part may be disposed at the first position to detect alignment of the unit cell before the unit cell is delivered from the first adsorbing part to the second adsorbing part.

The first adsorbing part may adsorb the unit cell disposed at a lower side of the first adsorbing part to move the unit cell to an upper side of the first adsorbing part through a rotational motion, and the first sensing part may detect alignment of the unit cell disposed at the upper side of the first adsorbing part in a state of being disposed above the first adsorbing part.

In a transfer method for transferring a plurality of unit cells stacked in a magazine, a method for transferring a unit cell according to another embodiment of the present invention may include an adsorbing process of adsorbing the unit cell disposed in the magazine by an adsorbing part, a first detecting process of detecting alignment of the unit cell, which is adsorbed to the adsorbing part, by a first sensing part, and a transfer process of receiving the unit cell from the adsorbing part to transfer the unit cell by a rotor part.

The rotor part may include at least one rotary wing, which rotates around a rotary shaft, and at least one adsorbing plate which is connected to one end of the rotary wing and adsorbs and transfers the unit cell.

The adsorbing process may include a first adsorbing process of adsorbing the unit cell, which is disposed in the magazine, by a first adsorbing part, and a second adsorbing process of receiving and adsorbing the unit cell, which is adsorbed by the first adsorbing part, by a second adsorbing part.

The transfer process may include an adjusting process of adjusting an adsorption angle and position of the adsorbing plate disposed above the second adsorbing part on the basis of the alignment of the unit cell, which is detected by the first sensing part.

The adsorbing plate may be characterized by sequentially moving to a first position at which the unit cell is received from the adsorbing part, a second position at which the alignment of the adsorbed unit cell is detected, a third position at which the adsorbed unit cell is released, and a fourth position at which the unit cell that is not released at the third position is discarded.

The transfer process may further include a second detecting process of detecting alignment of a bottom surface of the unit cell by a second sensing part disposed below the unit cell at the second position, and a third detecting process of detecting alignment of the unit cell by a third sensing part before the unit cell is released at the third position.

The transfer process may further include a determining process of determining whether to release the unit cell on the basis of the alignment of the unit cell, which is detected by each of the second sensing part and the third sensing part, a releasing process of releasing the unit cell that is determined to be released in the determining process, and a discarding process of discarding the unit cell, which is not released in the releasing process, at the fourth position.

### ADVANTAGEOUS EFFECTS

According to the preferred embodiment of the present invention, the alignment of the unit cell may be detected by the first sensing part before the rotor part adsorbs the unit cell, and the alignment of the unit cell may be corrected based on the detected information. Accordingly, the alignment detection and correction operations may be performed in advance to more precisely correct the alignment.

According to the preferred embodiment of the present invention, the first sensing part to the third sensing part may be disposed at the positions, respectively, so that the alignment correction range is secured and the discarded unit cells are reduced to lead the increase in production of the electrodes.

In addition, the effects may be included which are easily predictable by those skilled in the art from the configurations according to the preferred embodiments of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention. The present invention should not be construed as being limited to only the drawings.
FIG. 1 is a perspective view of an apparatus for transferring a unit cell according to an embodiment of the present invention.
FIG. 2 is a plan view of a state in which a unit cell is adsorbed to a first adsorbing part according to an embodiment of the present invention.
FIG. 3 is a plan view of a state in which an adsorbing plate is disposed at one side of a second adsorbing part according to an embodiment of the present invention.
FIG. 4 is a control block diagram of an apparatus for transferring a unit cell according to an embodiment of the present invention.
FIG. 5 is a flowchart of a method for transferring a unit cell according to another embodiment of the present invention.
FIG. 6 is a flowchart of a transfer process according to another embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

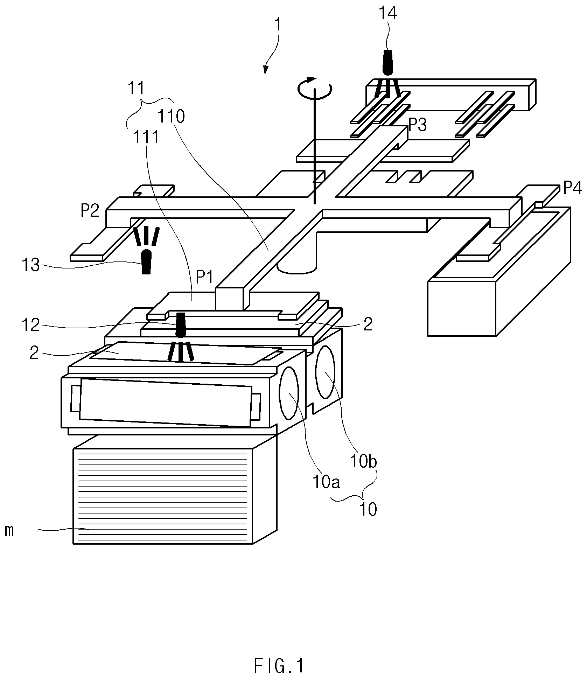

FIG. 1 is a perspective view of an apparatus 1 for transferring a unit cell according to an embodiment of the present invention.

Referring to FIG. 1, the apparatus 1 for transferring the unit cell may adsorb and transfer unit cells 2 stacked in a magazine m one by one. For example, the apparatus 1 for transferring the unit cell may transfer the unit cell 2 along a rotational radius through a rotational motion in a state of adsorbing the unit cell 2. Alignment of the unit cell 2 may be detected, the unit cell 2 may be released, and the unit cell 2 may be discarded at corresponding positions that are spaced a predetermined angle from each other with respect to a rotary shaft of the apparatus 1 for transferring the unit cell. In addition, the alignment of the unit cell 2 may be re-detected at a plurality of positions to increase accuracy of alignment correction of the unit cell 2. In particular, the alignment of the unit cell 2 may be detected in advance in a state in which the unit cell 2 is initially adsorbed from the magazine m, so that the alignment is more precisely corrected.

The apparatus 1 for transferring the unit cell may include an adsorbing part 10, a rotor part 11, and a first sensing part 12. In addition, the apparatus 1 for transferring the unit cell may further include each of a second sensing part 13, a third sensing part 14, and a controller 15.

The adsorbing part 10 may adsorb the unit cell 2 disposed in the magazine m. In other words, the adsorbing part 10 may adsorb one of the plurality of unit cells 2 stacked in the magazine m to move the one unit cell through the rotational motion and then, deliver the one unit cell to the rotor part 11 to be described later.

The adsorbing part 10 may include a first adsorbing part 10a and a second adsorbing part 10b.

The first adsorbing part 10a may adsorb the unit cell 2 disposed in the magazine m and rotate around a rotary shaft parallel to the ground. For example, the first adsorbing part 10a may include a first main body, which rotates around the rotary shaft parallel to the ground, and an adsorbing pad which moves so that a distance from the first main body varies.

In a state of adsorbing the unit cell 2 disposed at a lower side through the adsorbing pad, the first adsorbing part 10a may rotate at an angle of 180 degrees through the rotational motion to move the unit cell 2 to an upper side. In addition, the first adsorbing part 10a may rotate at an angle of 90 degrees in the same rotation direction and then, deliver the adsorbed unit cell 2 to the second adsorbing part 10b disposed at one side.

In this case, the adsorbing pad of the first adsorbing part 10a may descend toward the magazine m to adsorb the unit cell 2 and then, ascend and rotate to deliver the unit cell 2 to the second adsorbing part 10b.

Specifically, the first adsorbing part 10a may grip only one unit cell 2 through the adsorbing pad among the plurality of unit cells 2 stacked in the magazine m. In order to prevent a double-sheet phenomenon in which the plurality of unit cells 2 are transferred in an overlapping state, the first adsorbing part 10a may separate the overlapping unit cells 2 from each other through a shaking operation in a state of gripping the unit cell 2. In a state of gripping only a single unit cell 2 through the shaking operation, the first adsorbing part 10a may perform the rotational motion to deliver the single unit cell 2 to the second adsorbing part 10b.

The second adsorbing part 10b may be disposed at an outer side of the first adsorbing part 10a and receive the unit cell 2 from the first adsorbing part 10a to adsorb the unit cell 2, and may rotate around a rotary shaft parallel to the ground. For example, the second adsorbing part 10b may include a second main body, which rotates around the rotary shaft parallel to the ground, and an adsorbing surface which moves so that a distance from the second main body varies, and is provided to adsorb the unit cell 2. The adsorbing surface of the second adsorbing part 10b may adsorb the unit cell 2 using a vacuum state. In other words, as it is difficult to design an adsorbing pad in the second adsorbing part 10b for structural reasons, the second adsorbing part 10b may receive and grip the unit cell 2 from the first adsorbing part 10a through a vacuum adsorption method.

In a state of adsorbing the unit cell 2, the second adsorbing part 10b may perform the rotational motion to move the unit cell 2 to the upper side of the second adsorbing part 10b. Here, the rotary shaft of the second adsorbing part 10b and the rotary shaft of the first adsorbing part 10a may be parallel to each other. After the unit cell 2 is moved to the upper side of the second adsorbing part 10b, the unit cell 2 may be moved upward through an upward motion of the adsorbing surface to be delivered to the rotor part 11.

The rotor part 11 may move the unit cell 2 through a rotational motion in a state in which the rotor part 11 receives the unit cell 2 from the adsorbing part 10 and adsorbs the unit cell 2. For example, the rotor part 11 may move the adsorbed unit cell 2 to a plurality of predetermined positions in sequence, and consequently, the plurality of unit cells 2 stacked in the magazine m may be released at a specific position. In addition, the rotor part 11 may not release the unit cell 2, which fails to satisfy alignment conditions, and may discard the same at another specific position.

The rotor part 11 may include at least one rotary wing 110 and at least one adsorbing plate 111.

Each of the rotary wings 110 may rotate around a rotary shaft. The rotary wings 110 may be spaced a predetermined angle from each other with respect to the rotary shaft. For example, the rotary wings 110 may be constituted by four parts in total to form an angle of 90 degrees therebetween.

Each of the adsorbing plates 111 may adsorb and transfer the unit cell 2. For example, each of the adsorbing plates 111 may be connected to one end of the rotary wing 110 and transfer the unit cell 2 along a rotational radius through a rotational motion of the rotary wing in a state of adsorbing the unit cell 2. The adsorbing plate 111 may be connected to a bottom surface of the rotary wing, and the unit cell 2 may be transferred in a state of being adsorbed to a unit chamber in a bottom surface of the adsorbing plate 111.

However, the structure of each of the first adsorbing part 10a and the second adsorbing part 10b is not limited thereto. The adsorbing pad of the first adsorbing part 10a may be replaced with an adsorbing surface that performs vacuum adsorption, or the adsorbing surface of the second adsorbing part 10b may be replaced with an adsorbing pad.

The adsorbing plate 111 may sequentially move to a first position P1 at which the unit cell 2 is received from the adsorbing part 10, a second position P2 at which the alignment of the unit cell 2 is detected, a third position P3 at which the adsorbed unit cell 2 is released, and a fourth position P4 at which the unit cell 2 that is not released at the third position P3 is discarded. For example, the first position P1 to the fourth position P4 may be sequentially disposed to be angled at an angle of 90 degrees with respect to the rotary shaft, and when one adsorbing plate 111 moves from the first position P1 to the second position P2, another adsorbing plate 111 disposed behind in a rotation direction may move from the fourth position P4 to the first position P1.

The first sensing part 12 may detect alignment of the unit cell 2 adsorbed to the adsorbing part 10. Specifically, the first sensing part 12 may detect the alignment of the unit cell 2 before the unit cell 2 is delivered from the first adsorbing part 10a to the second adsorbing part 10b. For example, the first sensing part 12 may be disposed above the first adsorbing part 10a at the first position P1. That is, the first adsorbing part 10a may adsorb the unit cell 2 disposed at a lower side of the first adsorbing part 10a to move the unit cell 2 to an upper side of the first adsorbing part 10a through a rotational motion, and the first sensing part 12 may detect the alignment of the unit cell 2 disposed at the upper side of the first adsorbing part 10a.

Specifically, the first sensing part 12 may detect parameters in advance such as a parameter with respect to whether the plurality of unit cells 2 are stacked in the magazine m at a position and in a posture designed in advance, and a parameter with respect to whether the position and posture of the unit cell 2 are changed during the shaking operation of the first adsorbing part 10a for prevention of the double-sheet phenomenon.

More specifically, the first sensing part 12 may detect a change of the unit cell 2 such as a change in which the plurality of unit cells 2 are stacked in the magazine m to have a twisted shape. The first sensing part 12 may also detect a change of the unit cell 2 such as a change in which the posture of the unit cell 2 is twisted or the gripping position is changed by the shaking operation of the first adsorbing part 10a.

That is, as the first sensing part 12 detects the alignment of the unit cell 2 before the unit cell 2 is moved to the second adsorbing part 10b, the adsorbing plate 111 above the second adsorbing part 10b may adjust an adsorption angle and position in advance while the second adsorbing part 10b receives the unit cell 2 and performs the rotational motion, so that process time is reduced to increase process efficiency. In addition, as the alignment of the unit cell 2 is detected in advance before the rotor part 11 transfers the unit cell 2, the first sensing part 12 may operate so that the more precise alignment detecting process is performed, and the burden of the subsequent alignment detecting process is reduced.

The second sensing part 13 may be disposed below the adsorbed unit cell 2 at the second position P2 to detect alignment of a bottom surface of the unit cell 2. In other words, the second sensing part 13 may detect whether the alignment of the unit cell 2 is maintained to have an initial arrangement shape while the unit cell 2 is transferred by the rotational motion of the rotor part 11. That is, the second sensing part 13 may be disposed on a moving path of the unit cell 2 to re-check the alignment of the unit cell 2.

The third sensing part 14 may be disposed at the third position P3 to detect alignment of the unit cell 3 before the unit cell 3 is released. For example, the third sensing part 14 may be disposed at any one position above or below the unit cell 2. According to this detection operation of the third sensing part 14, as the alignment of the unit cell 2 is rechecked for determining whether the unit cell 2 is maintained to have a planned arrangement shape before the unit cell 2 is released at the third position P3, the unit cell 2 may be disposed with accurate alignment while the unit cell 2 is stacked or designed through the releasing operation, so that the process for the unit cell 2 is smoothly performed.

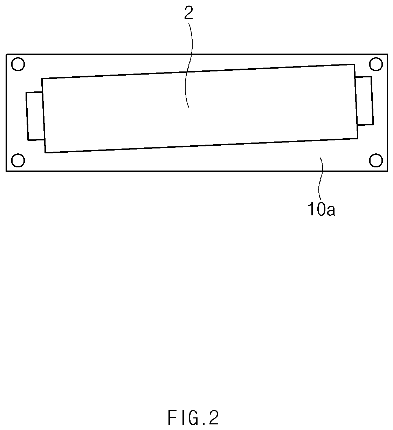

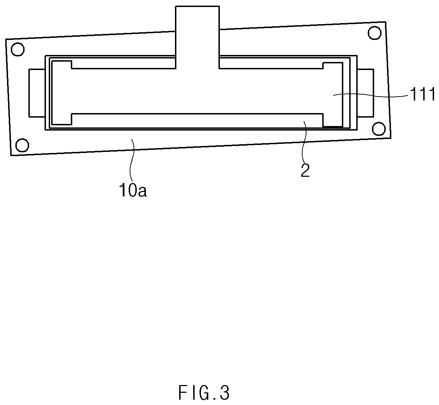

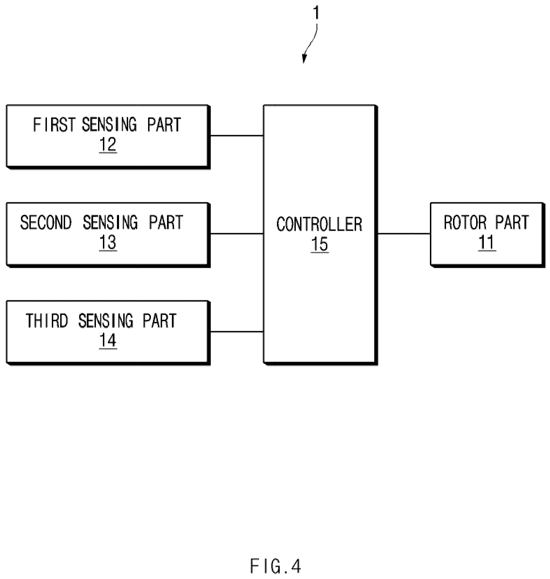

FIG. 2 is a plan view of a state in which the unit cell 2 is adsorbed to the first adsorbing part 10a according to an embodiment of the present invention. FIG. 3 is a plan view of a state in which the adsorbing plate 111 is disposed at one side of the second adsorbing part 10b according to an embodiment of the present invention. FIG. 4 is a control block diagram of the apparatus 1 for transferring the unit cell according to an embodiment of the present invention.

The controller 15 may control the adsorption and transfer operations of the rotor part 11 on the basis of the alignment of the unit cell 2, which is detected by the first sensing part 12. Specifically, the controller 15 may adjust an adsorption angle and position of the adsorbing plate 111 disposed above the second adsorbing part 10b on the basis of the alignment of the unit cell 2, which is detected by the first sensing part 12.

For example, referring to FIG. 2, the first sensing part 12 may be disposed above the first adsorbing part 10a to detect alignment of the unit cell 2 adsorbed to and disposed on a top surface of the first adsorbing part 10a. As in FIG. 2, the first sensing part 12 may detect the alignment of the unit cell 2 that is rotated at a predetermined angle and adsorbed on the top surface of the first adsorbing part 10a.

Referring to FIG. 3, based on this detected information of the first sensing part 12, the controller 15 may rotate the adsorbing plate 111, which is disposed above the second adsorbing part 10b, in response to the alignment information of the unit cell 2 and change the adsorption position of the adsorbing plate 111. For example, the controller 15 may control not only the adsorbing plate 111 to move three-dimensionally based on an X axis, an Y axis, and a Z axis, but also the adsorbing plate 111 to perform pitching, yawing, and rolling operations through an articulating operation. Through these operations of the adsorbing plate 111, the adsorbing plate 111 may grip the unit cell 2 by changing the gripping angle and the gripping position in response to the unit cell 2 changed in position and posture.

As the controller 15 adjusts the operation and the position of the adsorbing plate 111 on the basis of the alignment information detected by the first sensing part 12, the adsorbing plate 111 may more precisely adsorb and transfer the unit cell 2, and consequently, the accuracy and efficiency of the entire process may be improved.

In addition, referring to FIG. 4, the controller 15 may determine whether to release the unit cell 2 on the basis of the alignment of the unit cell 2, which is detected by each of the second sensing part 13 and the third sensing part 14. In other words, only when both an alignment value of the unit cell 2, which is detected by the second sensing part 13, and an alignment value of the unit cell 2, which is detected by the third sensing part 14, satisfy an alignment reference value for releasing, the controller 15 may control the rotor part 11 so that the unit cell 2 is released at the third position P3. According to these functions of the controller 15, the alignment of the unit cell 2 may be re-detected so that only the unit cell 2 having more accurate alignment is released. Accordingly, the accuracy of the process may be increased to increase the yield.

The controller 15 may control the rotor part 11 to transfer the unit cell 2, which is not released, to the fourth position P4. The unit cell 2 transferred to the fourth position P4 may be discarded.

Hereinafter, a method for transferring a unit cell 2 will be described. The description of configurations and concepts duplicated with those described above will be omitted.

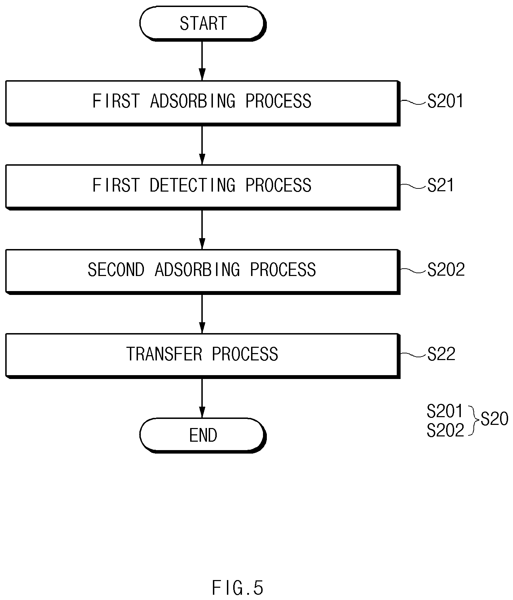

FIG. 5 is a flowchart of a method for transferring a unit cell 2 according to another embodiment of the present invention.

Referring to FIG. 5, a plurality of unit cells 2 stacked in a magazine m may be adsorbed and transferred one by one through the method for transferring the unit cell 2. For example, the unit cell 2 may be transferred along a rotational radius through a rotational motion in an adsorbed state. During the transfer of the unit cell 2, alignment of the unit cell 2 may be detected, and the unit cell 2 satisfying a release reference value may be released at a specific position.

The method for transferring the unit cell 2 may include an adsorbing process, a first detecting process (S21), and a transfer process (S22).

In the adsorbing process, an adsorbing part 10 may adsorb the unit cell 2 disposed in the magazine m. For example, the adsorbing part 10 may include a first adsorbing part 10a and a second adsorbing part 10b. The adsorbing process may include a first adsorbing process (S201) and a second adsorbing process (S202).

In the first adsorbing process (S201), the first adsorbing part 10a may adsorb the unit cell 2 disposed in the magazine m. For example, the adsorbing part 10 may include an adsorbing pad. In a state of adsorbing the unit cell 2 disposed at a lower side through the adsorbing pad, the first adsorbing part 10a may rotate at an angle of 180 degrees through a rotational motion to move the unit cell 2 to an upper side. In addition, the first adsorbing part 10a may rotate at an angle of 90 degrees and then, deliver the adsorbed unit cell 2 to the second adsorbing part 10b disposed at one side.

In the second adsorbing process (S202), the second adsorbing part 10b may receive and adsorb the unit cell 2 adsorbed by the first adsorbing part 10a. For example, the second adsorbing part 10b may include an adsorbing surface provided to adsorb the unit cell 2. The adsorbing surface of the second adsorbing part 10b may adsorb the unit cell 2 using a vacuum state. In a state of adsorbing the unit cell 2, the second adsorbing part 10b may perform the rotational motion to move the unit cell 2 to the upper side of the second adsorbing part 10b.

In the first detecting process (S21), a first sensing part 12 may detect alignment of the unit cell 2 adsorbed to the adsorbing part 10. Specifically, the first sensing part 12 may detect alignment of the unit cell 2 before the unit cell 2 is delivered from the first adsorbing part 10a to the second adsorbing part 10b. For example, the first sensing part 12 may be disposed above the first adsorbing part 10a at a first position P1. That is, the first adsorbing part 10a may adsorb the unit cell 2, which is disposed at a lower side of the first adsorbing part 10a, to move the unit cell 2 to an upper side of the first adsorbing part 10a through a rotational motion, and the first sensing part 12 may detect the alignment of the unit cell 2 disposed at the upper side of the first adsorbing part 10a.

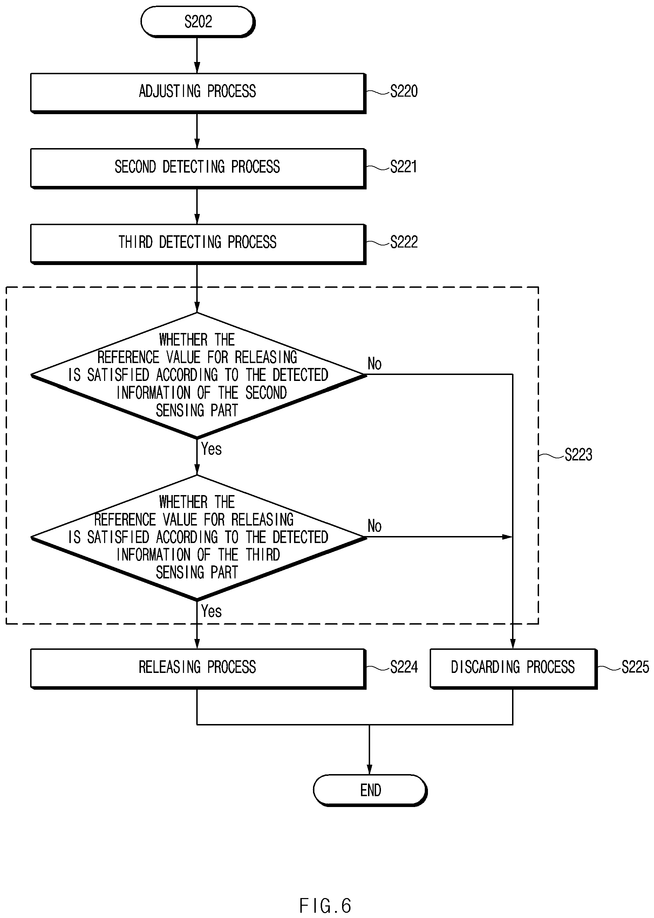

FIG. 6 is a flowchart of a transfer process (S22) according to another embodiment of the present invention.

Referring to FIG. 6, in the transfer process (S22), a rotor part 11 may receive the unit cell 2 from the adsorbing part 10 to transfer the unit cell 2. The rotor part 11 may include at least one rotary wing 110 and at least one adsorbing plate 111. Each of the rotary wings 110 may rotate around a rotary shaft. Each of the adsorbing plates 111 may adsorb and transfer the unit cell 2.

The transfer process (S22) may include an adjusting process (S220), a second detecting process (S221), a third detecting process (S222), a determining process (S223), a releasing process (S224), and a discarding process (S225).

In the adjusting process (S220), an adsorption angle and position of the adsorbing plate 111 disposed above the second adsorbing part 10b may be adjusted on the basis of the alignment of the unit cell 2, which is detected by the first sensing part 12. For example, the first sensing part 12 may be disposed above the first adsorbing part 10a to detect the alignment of the unit cell 2 adsorbed to and disposed on a top surface of the first adsorbing part 10a. The first sensing part 12 may detect the alignment of the unit cell 2 that is rotated at a predetermined angle and adsorbed on the top surface of the first adsorbing part 10a. Based on the detected information of the first sensing part 12, the controller 15 may rotate the adsorbing plate 111 disposed above the second adsorbing part 10b in response to the alignment information of the unit cell 2 and change the adsorption position of the adsorbing plate 111.

In the second detecting process (S221), the second sensing part 13 may be disposed below the unit cell 2 at the second position P2 to detect alignment of a bottom surface of the unit cell 2. In other words, the second sensing part 13 may detect whether the alignment of the unit cells 2 is maintained to have an initial arrangement shape while the unit cell 2 is transferred by a rotational motion of the rotor part 11.

In the third detecting process (S222), a third sensing part 14 may detect alignment of the unit cell 2 before the unit cell 3 is released at a third position P3.

In the determining process (S223), it may be determined whether to release the unit cell 2 on the basis of the alignment of the unit cell 2, which is detected by each of the second sensing part 13 and the third sensing part 14. Only when both an alignment value of the unit cell 2, which is detected by the second sensing part 13, and an alignment value of the unit cell 2, which is detected by the third sensing part 14, satisfy an alignment reference value for releasing, the controller 15 may control the rotor part 11 so that the unit cell 2 is released at the third position P3.

In the releasing process (S224), the unit cell 2 that is determined to be released in the determining process (S223) may be released.

In the discarding process (S225), the unit cell 2 that is not released in the releasing process (S224) may be discarded at a fourth position P4.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

### [Description of the Symbols]

1: Apparatus for transferring unit cell
10: Adsorbing part
11: Rotor part
12: First sensing part
13: Second sensing part
14: Third sensing part
15: Controller
10a: First adsorbing part
10b: Second adsorbing part
110: Plurality of rotary wings
111: Adsorbing plate
S201: First adsorbing process
S202: Second adsorbing process
S21: First detecting process
S22: Transfer process
S220: Adjusting process
S221: Second detecting process
S222: Third detecting process
S223: Determining process
S224: Releasing process
S225: Discarding process

## Claims

1. An apparatus for transferring a plurality of unit cells stacked in a magazine, the apparatus comprising:
an adsorbing part configured to adsorb each of the unit cells disposed in the magazine;
a rotor part configured to move the unit cell through a rotational motion in a state in which the rotor part receives the unit cell from the adsorbing part and adsorbs the unit cell; and
a first sensing part configured to detect alignment of the unit cell adsorbed to the adsorbing part.

2. The apparatus of claim 1, wherein the rotor part comprises:
at least one rotary wing configured to rotate around a rotary shaft; and
at least one adsorbing plate connected to one end of the rotary wing and configured to adsorb and transfer the unit cell.

3. The apparatus of claim 2, further comprising a controller configured to control the adsorption and transfer operations of the rotor part on the basis of the alignment of the unit cell, which is detected by the first sensing part.

4. The apparatus of claim 3, wherein the adsorbing part comprises:
a first adsorbing part configured to adsorb the unit cell disposed in the magazine; and
a second adsorbing part disposed at an outer side of the first adsorbing part and configured to receive the unit cell from the first adsorbing part to adsorb the unit cell.

5. The apparatus of claim 4, wherein the controller adjusts an adsorption angle and position of the adsorbing plate disposed above the second adsorbing part on the basis of the alignment of the unit cell, which is detected by the first sensing part.

6. The apparatus of claim 4, wherein the adsorbing plate sequentially moves to a first position at which the unit cell is received from the adsorbing part, a second position at which the alignment of the unit cell is detected, a third position at which the adsorbed unit cell is released, and a fourth position at which the unit cell that is not released at the third position is discarded.

7. The apparatus of claim 6, further comprising a second sensing part disposed below the adsorbed unit cell at the second position and configured to detect alignment of a bottom surface of the unit cell.

8. The apparatus of claim 7, further comprising a third sensing part disposed at the third position and configured to detect alignment of the unit cell before the unit cell is released.

9. The apparatus of claim 8, wherein the controller determines whether to release the unit cell on the basis of the alignment of the unit cell, which is detected by each of the second sensing part and the third sensing part, and controls the rotor part to transfer the unit cell, which is not released, to the fourth position.

10. The apparatus of claim 6, wherein the first sensing part is disposed at the first position to detect alignment of the unit cell before the unit cell is delivered from the first adsorbing part to the second adsorbing part.

11. The apparatus of claim 4, wherein the first adsorbing part adsorbs the unit cell disposed at a lower side of the first adsorbing part to move the unit cell to an upper side of the first adsorbing part through a rotational motion, and
the first sensing part detects alignment of the unit cell disposed at the upper side of the first adsorbing part in a state of being disposed above the first adsorbing part.

12. A method for transferring a plurality of unit cells stacked in a magazine, the method comprising:
an adsorbing process of adsorbing each of the unit cells, which is disposed in the magazine, by an adsorbing part;
a first detecting process of detecting alignment of the unit cell, which is adsorbed to the adsorbing part, by a first sensing part; and
a transfer process of receiving the unit cell from the adsorbing part to transfer the unit cell by a rotor part.

13. The method of claim 12, wherein the rotor part comprises:
at least one rotary wing configured to rotate around a rotary shaft; and
at least one adsorbing plate connected to one end of the rotary wing and configured to adsorb and transfer the unit cell.

14. The method of claim 13, wherein the adsorbing process comprises:
a first adsorbing process of adsorbing the unit cell, which is disposed in the magazine, by a first adsorbing part; and
a second adsorbing process of receiving and adsorbing the unit cell, which is adsorbed by the first adsorbing part, by a second adsorbing part.

15. The method of claim 14, wherein the transfer process comprises an adjusting process of adjusting an adsorption angle and position of the adsorbing plate disposed above the second adsorbing part on the basis of the alignment of the unit cell, which is detected by the first sensing part.

16. The method of claim 13, wherein the adsorbing plate sequentially moves to a first position at which the unit cell is received from the adsorbing part, a second position at which the alignment of the unit cell is detected, a third position at which the adsorbed unit cell is released, and a fourth position at which the unit cell that is not released at the third position is discarded.

17. The method of claim 16, wherein the transfer process further comprises:
a second detecting process of detecting alignment of a bottom surface of the unit cell by a second sensing part disposed below the unit cell at the second position; and
a third detecting process of detecting alignment of the unit cell by a third sensing part before the unit cell is released at the third position.

18. The method of claim 17, wherein the transfer process further comprises:
a determining process of determining whether to release the unit cell on the basis of the alignment of the unit cell, which is detected by each of the second sensing part and the third sensing part;
a releasing process of releasing the unit cell that is determined to be released in the determining process; and
a discarding process of discarding the unit cell, which is not released in the releasing process, at the fourth position.
